# EUROPEAN PATENT APPLICATION

(11) **EP 1 246 285 A2**
(43) Date of publication of application: **02.10.2002**
(21) Application number: 02007422.5
(22) Date of filing: 28.03.2002
(51) Int. Cl.: H01M 8/02

(54) **Fuel cell separator and method for manufacturing the same**

(30) Priority: 30.03.2001 JP 2001100563
(71) Applicant: NICHIAS CORPORATION, Tokyo (JP)
(72) Inventor: Inagaki, Tsuyoshi, Hamamatsu-shi, Shizuoka (JP); Segawa, Toru, Hamamatsu-shi, Shizuoka (JP); Omura, Atusi, Hamamatsu-shi, Shizuoka (JP); Nagai, Kouji, Hamamatsu-shi, Shizuoka (JP)
(74) Representative: Grünecker, Kinkeldey, Stockmair & Schwanhäusser Anwaltssozietät

(57) **Abstract**

A method for manufacturing a fuel cell separator, characterized in that graphite and carbon black are mixed into molten thermoplastic resin material so that melt mixing is carried out, and the obtained kneaded compound is formed into a predetermined shape.

## Description

### Background of the Invention

### Field of the Invention

The present invention relates to a fuel cell separator and a method for manufacturing the fuel cell separator, and particularly relates to a technique for improving conductivity.

### Description of the Related Art

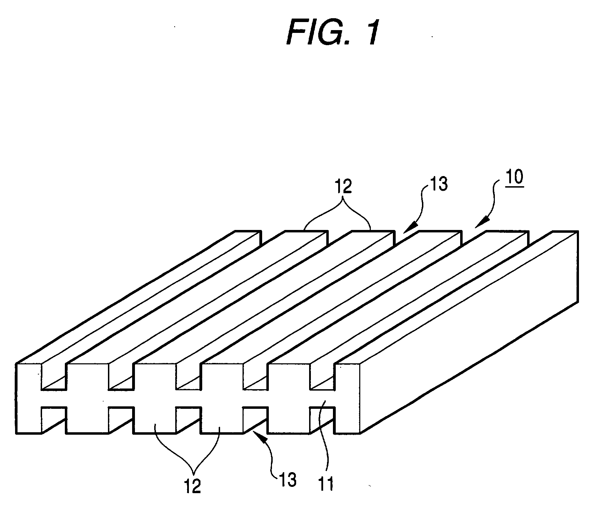

For example, as shown in the schematic perspective view in Fig. 1, a fuel cell separator 10 is formed by erectly providing a plurality of partitions 12 at predetermined intervals on the opposite sides of a flat plate portion 11. To form a fuel cell, a large number of such fuel cell separators 10 are laminated in the direction in which the partitions 12 project (in the up/down direction in the drawing). Then, by this lamination, reactive gas (hydrogen or oxygen) is designed to be circulated in each channel 13 formed by a pair of adjacent partitions 12.

Incidentally, a fuel cell separator is generally manufactured by kneading resin material and conductive material such as graphite or the like and forming the obtained kneaded compound into a shape as described above. Such systems for mixing the resin material and the conductive material include a dry mixing system in which powder of the resin material and powder of the conductive material are mixed, and a melt mixing system in which powder of the conductive material is mixed into the resin material melted by heat applied thereto.

Since the state of dispersion becomes uniform in the melt mixing system in comparison with that in the dry mixing system, the melt mixing system has an advantage that a stable formed product can be obtained. On the other hand, however, there is a problem that the resin material and the conductive material are mixed more than necessity so that the resin material which is an insulator obtains entrance among particles of the conductive material. As a result, a conductive path based on the particles of the conductive material in contact with one another becomes difficult to form, so that the conductivity deteriorates.

### Summary of the Invention

The present invention was developed in consideration of such circumferences. An object of the present invention is to provide a fuel cell separator which can be manufactured without lowering the conductivity even if a melt mixing system is used.

The present inventors made diligent researches into kinds and compounds of resin material and conductive material. As a result, the present inventor et al. found that when thermoplastic resin was used as the resin material while comparatively large-size graphite and comparatively small-size carbon black were used together, the conductivity of the mixture did not deteriorate even if these raw materials were mixed in a melt mixing system. This finding brought about completion of the present invention.

That is, in order to attain the foregoing object, the present invention provides a fuel cell separator characterized by containing thermoplastic resin and conductive material made of a mixture of graphite and carbon black.

To attain a similar object, the present invention also provide a method for manufacturing a fuel cell separator characterized in that graphite and carbon black are mixed into molten thermoplastic resin material so that melt mixing is carried out, and the obtained kneaded compound is formed into a predetermined shape.

### Brief Description of the Drawings

Fig. 1 is a schematic perspective view showing an example of a fuel cell separator according to the present invention and in the prior art.

### Detailed Description of the Preferred Embodiments

Description will be made below in detail about the present invention.

A fuel cell separator according to the present invention contains thermoplastic resin and conductive material made of a mixture of graphite and carbon black.

There is no restriction on the kind of thermoplastic resin. One kind of thermoplastic resin or a mixture of a plurality of kinds of thermoplastic resins, such as polypropylene resin, polycarbonate resin, ABS resin, polyethylene terephthalate resin, polybutylene terephthalate resin, polyamide resin, etc., may be used.

As the graphite, natural graphite such as flake graphite or the like, or artificial graphite may be used. It is preferable that expanded graphite obtained by heating flake graphite treated with concentrated sulfuric acid or the like is used. On the other hand, as the carbon black, it is preferable that acetylene black or Ketjenblack is used.

In the conventional melt mixing system, resin material gaining entrance among particles of conductive material made it difficult to form a conductive path among the particles of the conductive material. In the present invention, however, graphite having a large particle size and carbon black having a small particle size are used together. Accordingly, even if thermoplastic resin exists in gaps among particles of the graphite, particles of the carbon black enter those gaps so as to help to form a conductive path. Thus, the lowering of the conductivity can be suppressed in the fuel cell separator as a whole. To exert such operation effectively, it is preferable that the compounding ratio of the graphite to the carbon black is set to be in a range of from 1:1 to 4:1. Incidentally, when greater conductivity is asked for, it is preferable that the compounding ratio of the graphite to the carbon black is set to be in a range of from 3:2 to 7:2.

In addition, the total amount of the graphite and the carbon black is set to be 40-85 weight%. The reason why the total amount is set to be not lower than 40 weight% is to secure low resistivity (high conductivity) of the fuel cell separator. Incidentally, when greater conductivity is asked for, it is preferable that the amount of these materials is set to be in a range of 70-82 weight%.

Correspondingly to the amount of the conductive material, preparation is made so that the amount of the thermoplastic resin is in a range of 15-60 weight%. This is intended to satisfy items such as formability, shape retention properties, good releasability from a compression molding tool used at the time of manufacturing, and gas barrier properties of an obtained fuel cell separator. That is, when the amount of the thermoplastic resin is lower than 15 weight%, the fluidity of the raw material kneaded compound is reduced so that the formability deteriorates. On the contrary, when the amount of the thermoplastic resin exceeds 60 weight%, the amount of the conductive material is reduced relatively so that the conductivity of an obtained fuel cell separator becomes low.

Further, if the cost is allowed, inorganic fibrous material, graphite fibrous material, carbon fibrous material and the like may be mixed to achieve greater strength within the limits not to degrade the properties as a fuel cell separator.

To manufacture the fuel cell separator according to the present invention, first, the thermoplastic resin is heated to its melting point or higher (for example, 180-220°C in the case of polypropylene) so as to be brought into a melt state. Predetermined amounts of graphite and carbon black are added to the molten thermoplastic resin, and kneaded by use of a known kneading apparatus. Next, this kneaded compound is filled into a mold applied with a mold release agent (graphite powder), and compression molding is carried out under the condition of 180-220°C. After that, the mold is cooled to 100°C or lower, and the kneaded compound is extracted from the mold. Thus, a fuel cell separator can be obtained.

Since a melt mixing system is used in the aforementioned manufacturing method, the graphite or the carbon black can be mixed easily into the thermoplastic resin. Further, since the mixing is carried out for enhancing the fluidity of the resin, the thermoplastic resin is mixed with the graphite or the carbon black uniformly. As a result, the stability of the obtained kneaded compound is enhanced.

Incidentally, the molding method is not limited to the aforementioned compression molding method. For example, a molding method of injection molding or extrusion molding, or the like, may be adopted.

### Examples

The present invention will be described below further with its examples and comparative examples. However, the present invention is not limited to these examples at all.

### (Examples 1 to 4, and Comparative Examples 1 and 8)

The following conductive material and resin material were used and mixed in the compounding ratios shown in Table 1 and in a melt mixing system, and further kneaded to form kneaded compounds. Then, fuel cell separators were manufactured in the following method.

### <Conductive Material>

expanded graphite (particle size about 400-800 µm)
acetylene black (particle size about 5-10 µm)

### <Thermoplastic Resin>

polypropylene

### <Manufacturing Method>

By use of a kneader, expanded graphite and acetylene black are mixed and kneaded into molten polypropylene heated to 180-220°C. This kneaded compound is poured into a molding tool whose inner wall has been applied with graphite powder having a particle size of 500 µm. Then, compression molding is performed at a temperature of 180-220°C and at a pressure of 98 MPa. The kneaded compound is formed into a sheet 0.7 mm thick. In such a manner, specimens were obtained.

### <Intrinsic Volume Resistivity>

The intrinsic volume resistivity of each of the obtained specimens was obtained in a method for testing resistivity on conductive plastics on the basis of a 4-point probe technique according to JIS K7194. That is, the surface resistance value of the center portion of each of the specimens was measured with a 4-point probe type conductivity meter, Loresta-CP. The intrinsic volume resistivity was obtained by multiplying the measured value by the sample thickness and a correction coefficient according to JIS K7194. The results were shown in Table 1.

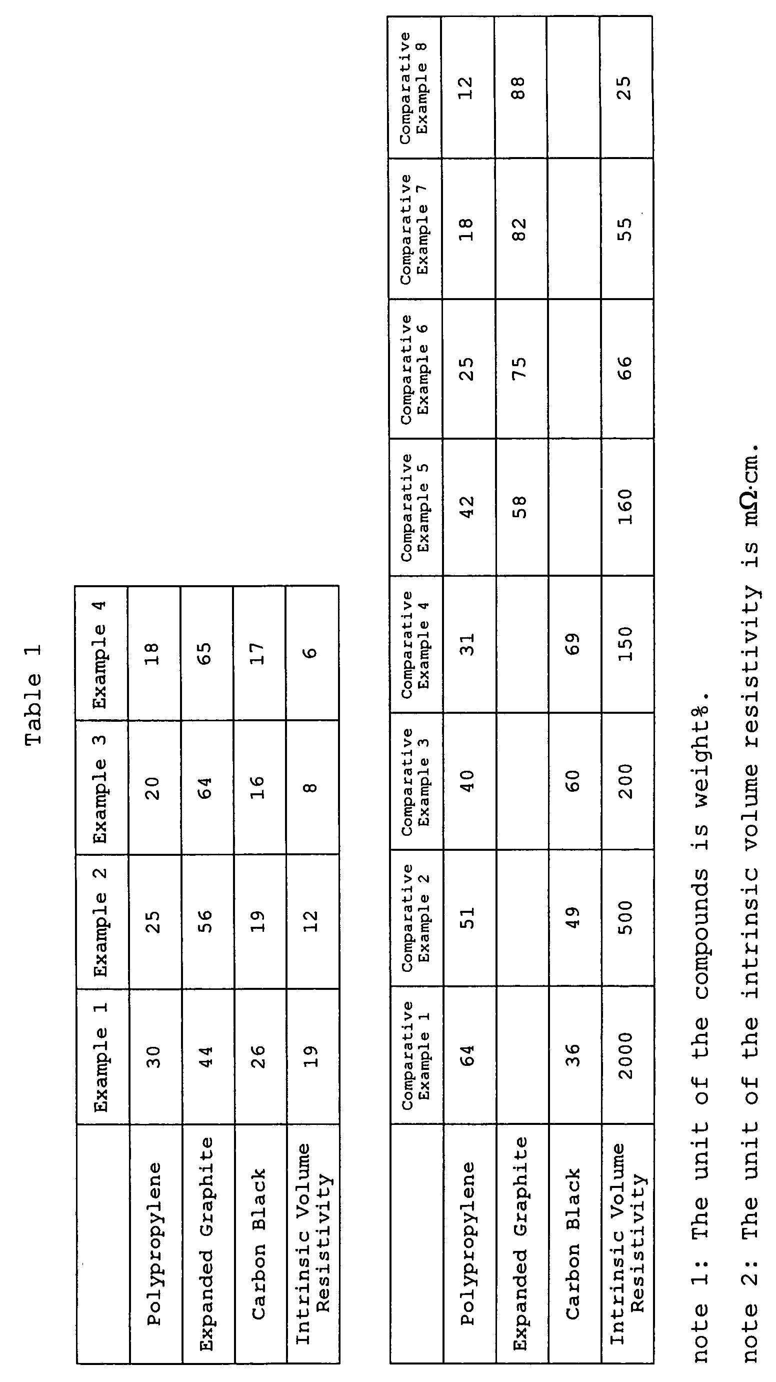

As shown in Table 1, the specimens using expanded graphite and carbon black together show lower intrinsic volume resistivity than the specimens using expanded graphite alone or carbon black alone.

As described above, according to the present invention, a fuel cell separator can be manufactured without lowering the conductivity even if a melt mixing system is used.

## Claims

1. A fuel cell separator comprising:
thermoplastic resin; and
conductive material including a mixture of graphite and carbon black.

2. The fuel cell separator according to Claim 1, wherein a ratio of said graphite to said carbon black is in a range of from 1:1 to 4:1 on a weight basis.

3. The fuel cell separator according to Claim 1, wherein a ratio of said thermoplastic resin is 15-60 weight%, and a ratio of said conductive material is 40-85 weight%.

4. The fuel cell separator according to Claim 2, wherein a ratio of said thermoplastic resin is 15-60 weight%, and a ratio of said conductive material is 40-85 weight%.

5. A method for manufacturing a fuel cell separator, comprising the steps of:
mixing graphite and carbon black into molten thermoplastic resin material in order to obtain a kneaded compound; and
forming the kneaded compound into a predetermined shape.

6. The method according to Claim 5, wherein said graphite and said carbon black are used at a ratio in a range of from 1:1 to 4:1 on a weight basis.

7. The method according to Claim 5, wherein said step of mixing is carried out at a ratio of 15-60 weight% of said thermoplastic resin, and 40-85 weight% of a total sum of said graphite and said carbon black.

8. The method according to Claim 6, wherein said step of mixing is carried out at a ratio of 15-60 weight% of said thermoplastic resin, and 40-85 weight% of a total sum of said graphite and said carbon black.
